Europäisches Patentamt

European Patent Office

Office européen des brevets

(11) Numéro de publication : **0 437 132 A1**

(12) **DEMANDE DE BREVET EUROPEEN**

(21) Numéro de dépôt : 90403665.4

(51) Int. Cl.⁵ : **C04B 33/04, B01J 29/02**

(22) Date de dépôt : **19.12.90**

Le titre de l'invention a été modifié (Directives relatives à l'examen pratiqué à l'OEB, A-III, 7.3)

(30) Priorité : **27.12.89 FR 8917230**

(43) Date de publication de la demande :
**17.07.91 Bulletin 91/29**

(84) Etats contractants désignés :
**BE DE ES FR GB GR IT NL**

(71) Demandeur : **RHONE-POULENC CHIMIE**
**25, quai Paul Doumer**
**F-92408 Courbevoie Cédex (FR)**

(72) Inventeur : **Popa, Jean-Michel**
**2, rue Roger Breton**
**F-93700 Drancy (FR)**
Inventeur : **Aubry, Alain**
**43, Boulevard de Polangis**
**F-94340 Joinville Le Pont (FR)**

(74) Mandataire : **Dutruc-Rosset, Marie-Claude et al**
**RHONE-POULENC INTERSERVICES Service Brevets Chimie 25, Quai Paul Doumer**
**F-92408 Courbevoie Cédex (FR)**

(54) **Argiles pontées à grand espacement interfoliaire et leur procédé de préparation.**

(57)    La présente invention a pour objet des argiles pontées par des piliers aluminiques ayant un espacement interfoliaire d'au moins 1 nm.
    Elles sont obtenues selon un procédé qui consiste à introduire une solution aqueuse d'une base dans un milieu réactionnel comprenant un sel d'aluminium et l'argile en suspension aqueuse, puis à séparer le produit obtenu et qui est caractérisé par le fait que l'addition de la base est effectuée d'une manière contrôlée.
    Les argiles de l'invention sont particulièrement bien adaptées à des applications dans le domaine de la catalyse.

EP 0 437 132 A1

Jouve, 18, rue Saint-Denis, 75001 PARIS

# NOUVELLES ARGILES PONTEES A GRAND ESPACEMENT INTERFOLIAIRE ET LEUR PROCEDE DE PREPARATION

La présente invention a pour objet de nouvelles argiles pontées à grand espacement interfoliaire. L'invention vise également le procédé pour les obtenir.

Certaines argiles ont une structure à réseau expansible. En effet, celles-ci ont la propriété de pouvoir absorber de l'eau, notamment entre les différents feuillets qui les composent. Ont cette propriété, les argiles du groupe des smectites et des vermiculites. La structure de ces argiles peut être décrite, d'une manière simplifiée, comme une structure en feuillets à couche triple d'une épaisseur d'environ 1 nm, comportant deux couches de tétraèdres $SiO_4$ séparées par une couche d'octaèdres $MX_6$, M pouvant être un ion trivalent, par exemple $Al^{3+}$ dans le cas des argiles dioctaédriques ou un ion divalent, par exemple $Mg^{2+}$ dans le cas des argiles trioctaédriques ; X représente un atome d'oxygène, un groupement hydroxyle OH ou un atome de fluor F.

Les atomes de silicium des tétraèdres peuvent être remplacés en partie par des atomes d'aluminium et les atomes d'aluminium et de magnésium des octaèdres peuvent être substitués en particulier respectivement par des atomes de magnésium ou de fer et de lithium.

En raison du caractère expansible des argiles, on les a utilisées dans le domaine de la catalyse, où l'on recherche la plus grande surface accessible aux réactifs.

Toutefois, l'intérêt des argiles non pontées comme catalyseurs ou supports de catalyseurs est limité à la catalyse en phase liquide car les argiles expansées subissent une dessication dès la température d'ébullition du solvant. Il en résulte une perte de leur caractère expansé et, par là-même, de leur surface inter-feuillets accessible.

On a donc cherché à expanser les argiles selon une autre technique permettant leur emploi comme catalyseurs ou supports de catalyseurs également en phase gazeuse.

On a ainsi réussi à expanser les argiles en introduisant entre les feuillets d'argiles une espèce minérale créant ainsi des piliers ou des ponts. On désigne par "argiles pontées" les argiles ainsi obtenues.

Une technique bien connue consiste à effectuer le pontage par des oligomères d'un hydroxyde d'un métal, notamment d'aluminium.

Généralement, il est habituel de réaliser le pontage des argiles selon un procédé en trois étapes :
- fabrication du pilier aluminique $Al_{13}$ de formule $[Al_{13} O_4 (OH)_{24+x} (H_2O)_n](7-x)+$ (avec x compris entre 0 et 4 et n variant le plus souvent entre 8 et 12) à partir d'un sel d'aluminium et d'une base,
- mélange de la solution contenant la source $Al_{13}$ avec la suspension aqueuse d'argile,
- lavage ou dialyse du produit final.

On peut citer, notamment, FR-A 2 512 043 qui décrit un procédé de ce type.

Le procédé décrit dans FR-A 2 512 043 permet de synthétiser une argile pontée aluminique dont l'espacement basal est d'au plus 1,95 nm, ce qui correspond à un espacement interfoliaire au plus de 1 nm.

Dans l'exposé de l'invention, on entend par "espacement interfoliaire", l'espacement entre deux feuillets et par "espacement basal", représenté par $d_{001}$, la somme de l'épaisseur d'un feuillet et de l'espacement interfoliaire.

Les matériaux microporeux à structures lamellaires pontées peuvent présenter des propriétés intéressantes de sélectivité de forme en catalyse, si la taille de leur porosité correspond à celle des molécules de réactifs et de produits de réaction. Or, les molécules utilisées en chimie fine ont fréquemment une taille supérieure à 1 nm, ce qui rend les argiles pontées d'espacement interfoliaire d'une dimension plus faible inutilisables dans des réactions les impliquant.

Un des objectifs de la présente invention est de fournir une argile dont la porosité est supérieure à 1 nm dans l'objectif, entre autres, d'une application en chimie fine.

Un autre objectif de l'invention est de fournir une argile dont l'espacement interfoliaire est maintenu lorsque l'argile est soumise à un traitement thermique.

La présente invention a précisément pour objet de nouvelles argiles pontées par des piliers aluminiques ayant un espacement interfoliaire d'au moins 1 nm, de préférence d'au moins 1,2 nm et encore plus préférentiellement compris entre 1,5 nm et 3,0 nm.

Une des caractéristiques des argiles de l'invention est qu'elle présente une bonne stabilité thermique. C'est ainsi que, soumise à une température comprise entre 300°C et 800°C, elle présente toujours un espacement interfoliaire compris dans l'intervalle revendiqué.

Les argiles pontées de l'invention sont originales de par leur structure. Quant à leur composition chimique, celle-ci diffère peu des argiles pontées à plus faible espacement interfoliaire.

Comme mentionné ci-dessus, elles présentent une structure en feuillets à couche triple d'une épaisseur d'environ 1 nm, comportant deux couches de tétraèdres $SiO_4$ séparées par un pilier aluminique qui est un oxyhydroxyde d'aluminium.

Les atomes de silicium peuvent être substitués notamment par des atomes d'aluminium ou de fer.

Un autre objet de la présente invention réside dans le procédé de préparation desdites argiles pontées à grande distance interfoliaire.

Ce procédé, qui consiste à introduire une solution aqueuse d'une base dans un milieu réactionnel comprenant un sel d'aluminium et l'argile en suspension aqueuse, puis à séparer le produit obtenu, est caractérisé par le fait que l'addition de la base dans le milieu réactionnel est effectuée de telle sorte que le rapport entre la concentration [C] en moles OH⁻ apportées par la base exprimée en moles/litre et la durée d'addition (h) des moles d'OH⁻ exprimée en heures est d'au moins 0,1 et de préférence compris dans un intervalle allant de 0,1 à 5,0.

Conformément à la présente invention, il a été trouvé que des argiles à plus grand espacement interfoliaire pouvaient être obtenues en contrôlant la formation des colloïdes d'hydroxyde d'aluminium par la concentration en ions OH⁻ dans le milieu réactionnel et leur vitesse d'addition.

Le procédé de l'invention convient à toutes les argiles d'origine naturelle ou synthétique dès lors qu'elles présentent une structure gonflante.

Les argiles préférées appartiennent aux groupes désignés sous le nom de smectites. A titre d'exemples, on peut citer :

la montmorillonite $[Al_{1,67} Mg_{0,33} (Na_{0,33})]Si_4 O_{10} (OH)_2$

la beidellite $Al_2 [Al_{0,33} (Na_{0,33})Si_{3,67}]O_{10} (OH)_2$

l'hectorite $[Mg_{2,67} Li_{0,33} (Na_{0,33})]Si_4 O_{10} (OH)_2$

Les formules sont données à titre indicatif et sans caractère limitatif.

On peut également faire appel à une argile de type vermiculite.

Une variante préférée du procédé de l'invention est de mettre en oeuvre une argile ayant subi un traitement consistant à échanger les cations calcium contenus dans l'argile par des cations sodium. Ce traitement est connu et a pour effet d'améliorer le gonflement de l'argile. On précise que, généralement, on met en contact l'argile avec une solution aqueuse d'un sel de sodium, de préférence le chlorure de sodium.

La quantité de sel de sodium est le plus souvent excédentaire par rapport à la capacité d'échange de l'argile. L'excès de sel de sodium peut être éliminé par lavage à l'eau de l'argile ainsi modifiée.

Il est également possible de remplacer d'une manière similaire les cations calcium par des ions H⁺, de préférence apportés par un acide fort tel que, par exemple, l'acide chlorhydrique, l'acide sulfurique, l'acide nitrique, etc... On peut utiliser, par exemple, une solution acide ayant une normalité d'environ 1 N.

Selon l'invention, on met en oeuvre un sel d'un cation aluminium. Le cation aluminium est le cation qui intervient dans le pilier de pontage entre les feuillets.

En ce qui concerne la nature de sel, on peut faire appel à tout sel soluble du cation aluminium. On le met en oeuvre généralement sous forme de nitrate ou de chlorure.

Le sel peut être introduit dans le procédé de l'invention, soit sous forme solide, soit sous forme de solution aqueuse.

Dans le procédé de l'invention, intervient un autre réactif, à savoir une base. Par "base", on entend, de préférence, une base présentant un pkb inférieur ou égal à 5,0.

Comme exemples de base, on peut faire appel à un hydroxyde de métal alcalin, alcalino-terreux ou d'ammonium. On peut citer, notamment, l'hydroxyde de sodium, de potassium, de calcium ou l'ammoniaque.

Comme autres bases susceptibles d'être mises en oeuvre, on peut mentionner un hydroxyde de tétraalkylammonium ayant de préférence des radicaux alkyle contenant de 1 à 4 atomes de carbone et l'on fait appel plus particulièrement à l'hydroxyde de tétraméthylammonium ou l'hydroxyde de tétraéthylammonium.

Le procédé de l'invention consiste à ajouter la solution basique dans le milieu réactionnel comprenant l'argile en suspension aqueuse et un sel d'aluminium.

La concentration de l'argile dans le milieu réactionnel est choisie la plus élevée possible tout en maintenant des conditions de manipulation aisées.

Ladite concentration peut être comprise, par exemple, entre 0,1 g/l et 20 g/l.

La concentration de la base dans la solution de départ est choisie avantageusement inférieure à 1 N, de préférence comprise entre 0,1 N et 0,5 N.

Pour ce qui est de la proportion des différents réactifs, on définit un rapport pondéral entre le poids de sel de cation Al exprimé en poids d'oxyde mis en oeuvre et le poids de l'argile mise en suspension choisi de préférence entre 0,1 et 6,0 et, encore plus préférentiellement, entre 1,0 et 5,0.

La quantité de base introduite dans le milieu réactionnel est telle que le rapport molaire entre le nombre de moles d'OH⁻ et le nombre de moles de cation $Al^{3+}$ est inférieur à 3,0, de préférence compris entre 2,0 et 2,7, et encore plus préférentiellement entre 2,3 et 2,7.

Conformément au procédé de l'invention, on ajoute rapidement la solution basique dans le milieu réac-

3

tionnel. Afin de quantifier ce paramètre, on définit le rapport entre la concentration [C] en moles d'OH⁻ apportées par la base exprimée en moles/litre et la durée d'addition (h) des moles d'OH⁻ exprimée en heures.

Ledit rapport est compris entre 0,1 et environ 5,0.

Les rapports préférés sont compris entre 0,3 et 2,0.

Le procédé de l'invention est conduit généralement à la température ambiante (le plus souvent entre 15°C et 25°C).

On maintient le milieu réactionnel sous agitation tout au cours du procédé.

Le pH final du milieu réactionnel se situe entre environ 4 et environ 6.

A la fin du traitement, on récupère l'argile selon les techniques classiques de séparation solide-liquide telles que, par exemple, filtration ou centrifugation.

Dans une étape suivante, on soumet l'argile à un traitement thermique. Elle peut être soumise directement à une opération de calcination ou bien subir un séchage préalable.

Les conditions de séchage peuvent varier dans de larges limites. C'est ainsi que la température peut être choisie entre 80°C et 120°C, de préférence aux environs de 100°C. La durée de séchage est choisie, de préférence, entre 2 et 48 heures. L'opération de séchage peut être faite à l'air ou sous pression réduite, par exemple, entre 1 et 100 mm de mercure (133,322 Pa et 13332,2 Pa).

Une autre variante de l'invention consiste à soumettre l'argile séparée à un traitement de lyophilisation. Il est obtenu par une congélation brusque du produit à une température située, de préférence, entre -10°C et -50°C suivie par une sublimation sous pression réduite : ladite pression n'étant pas critique et choisie de préférence entre $10^{-5}$ et 0,5 atmosphère.

Selon la dernière étape du procédé, on soumet le produit éventuellement séché, à une calcination à une température choisie entre 300°C et 800°C, mais de préférence, entre 350°C et 600°C. Elle dure environ de 1 à 6 heures et, de préférence, environ 2 heures.

Le procédé de l'invention conduit donc à des argiles pontées par des piliers aluminiques présentant à un espacement interfoliaire supérieur à 1,0 nm, de préférence supérieur à 1,2 nm et encore plus préférentiellement compris entre 1,5 nm et 3,0 nm.

Elles présentent une bonne stabilité thermique et sont donc parfaitement adaptées à des applications dans le domaine de la catalyse tel que le cracking catalytique des hydrocarbures paraffiniques ou l'isomérisation des hydrocarbures paraffiniques ou d'oléfines.

On donne, ci-après, un exemple de réalisation du procédé de l'invention qui ne présente aucun caractère limitatif.

## EXEMPLE

1 — Dans cet exemple, on met en oeuvre une argile de type montmorillonite provenant du WYOMING et appelée bentonite VOLCLAY.

On prépare une suspension aqueuse à 20 g/l de ladite argile que l'on agite violemment et on laisse décanter pendant 24 heures.

Ensuite, on fait un prélèvement de la fraction granulométrique à 2 μm et l'on obtient une suspension aqueuse d'argile dénommée A.

2 — Dans l'étape suivante, on effectue un traitement sodique. A cet effet, on ajoute à la suspension A du chlorure de sodium en excès par rapport à la capacité d'échange de l'argile, soit 200 milliéquivalents de sodium pour 100 g d'argile.

La suspension est agitée pendant 1 heure à température ambiante (22°C).

On effectue la séparation de l'argile, par centrifugation à 3000 tours/minute pendant 10 minutes.

On répète l'opération de traitement au chlorure de sodium.

On procède à une deuxième centrifugation et on lave l'argile avec de l'eau distillée jusqu'à disparition complète des ions chlorure dans les eaux de lavage.

On met l'argile en suspension dans l'eau, à raison de 20 g/l. Il s'agit de la suspension B.

3 — On prépare une solution aqueuse de nitrate d'aluminium à 0,4 mole/litre d'$Al(NO_3)_3,9H_2O$.

On ajoute 0,5 litre de cette solution dans 1,0 litre de la suspension B.

On agite quelques minutes à température ambiante.

On obtient ainsi la suspension C.

4 — Dans la suspension C, on ajoute sous agitation et à température ambiante, 900 cm³ d'une solution d'ammoniaque 0,52 N, lentement et régulièrement, pendant 33 minutes.

On arrête l'addition et on poursuit l'agitation pendant 10 minutes.

Le pH de la suspension obtenue est de 4,5.

La suspension d'argile est ensuite centrifugée, à 3000 tours/minute, pendant 10 minutes.

— On sèche le produit séparé à l'étuve à 120°C, pendant 12 heures, puis on en calcine plusieurs fractions dans un four à moufle, pendant 2 heures, à différentes températures.

L'analyse de l'argile par diffraction aux rayons X révèle l'existence d'une raie $d_{001}$, caractéristique du pontage aluminique : le sigle $d_{001}$ définit l'espacement basal qui est la somme de l'épaisseur d'un feuillet et de l'espacement interfoliaire.

Les résultats obtenus sont rassemblés dans le tableau I suivant :

### Tableau I

| Température de calcination °C | $d_{001}$ en nm |
|---|---|
| 350 | 3,73 |
| 450 | 2,84 |
| 550 | 2,67 |
| 700 | 2,67 |

Il ressort de l'examen du Tableau I :
– que l'argile pontée par des piliers aluminiques selon l'invention présente un grand espacement interfoliaire de l'ordre de 2,73 nm à 350°C,
– que ladite argile conserve un grand espacement interfoliaire même lorsqu'elle est calcinée à haute température (700°C).

## Revendications

1. Argiles pontées par des piliers aluminiques ayant un espacement interfoliaire d'au moins 1 nm, de préférence d'au moins 1,2 nm et encore plus préférentiellement compris entre 1,5 nm et 3,0 nm.

2. Argiles selon la revendication 1 caractérisées par le fait qu'elles présentent une stabilité thermique de leur espacement interfoliaire dans une gamme de température de 300°C à 800°C.

3. Procédé de préparation des argiles pontées décrites dans l'une des revendications 1 et 2 qui consiste à introduire une solution aqueuse d'une base dans un milieu réactionnel comprenant un sel d'aluminium et l'argile en suspension aqueuse, puis à séparer le produit obtenu, caractérisé par le fait que l'addition de la base dans le milieu réactionnel est effectuée de telle sorte que le rapport entre la concentration [C] en moles $OH^-$ apportées par la base exprimée en moles/litre et la durée d'addition (h) des moles d'$OH^-$ exprimée en heures est d'au moins 0,1 et, de préférence, compris dans un intervalle allant de 0,1 à 5,0 et encore plus préférentiellement entre 0,3 et 2,0.

4. Procédé selon la revendication 3 caractérisé par le fait que l'argile mise en oeuvre a subi un traitement consistant à échanger les ions calcium par des ions sodium ou $H^+$.

5. Procédé selon l'une des revendications 3 et 4 caractérisé par le fait que le sel d'aluminium est sous forme nitrate ou chlorure.

6. Procédé selon l'une des revendications 3 à 5 caractérisé par le fait que la base présente un pkb inférieur ou égal à 5,0.

7. Procédé selon la revendication 6 caractérisé par le fait que la base est un hydroxyde de métal alcalin, alcalino-terreux ou d'ammonium.

8. Procédé selon l'une des revendications 3 à 7 caractérisé par le fait que la concentration de l'argile est comprise entre 0,1 g/l et 20 g/l.

9. Procédé selon l'une des revendications 3 à 8 caractérisé par le fait que la concentration de la solution basique de départ est inférieure à 1 N, de préférence comprise entre 0,1 N et 0,5 N.

10. Procédé selon l'une des revendications 3 à 9 caractérisé par le fait que le rapport pondéral entre le poids de sel de cation Al exprimé en poids d'oxyde mis en oeuvre et le poids d'argile mise en suspension est choisi entre 0,1 et 6,0, de préférence entre 1,0 et 5,0.

11. Procédé selon l'une des revendications 3 à 10 caractérisé par le fait que la quantité de base introduite dans le milieu réactionnel est telle que le rapport molaire entre le nombre de moles d'OH$^-$ et le nombre de moles de cation Al$^{3+}$ est inférieur à 3,0, de préférence compris entre 2,0 et 2,7, et encore plus préférentiellement entre 2,3 et 2,7.

12. Procédé selon l'une des des revendications 3 à 11 caractérisé par le fait que l'on ajoute rapidement la base dans le milieu réactionnel

13. Procédé selon l'une des revendications 3 à 12 caractérisé par le fait que l'argile est séchée entre 80°C et 120°C.

14. Procédé selon l'une des revendications 3 à 12 caractérisé par le fait que l'argile est soumise à un traitement de lyophilisation.

15. Procédé selon l'une des revendications 3 à 14 caractérisé par le fait que l'argile est ensuite calcinée à une température comprise entre 300°C et 800°C, de préférence entre 350°C et 600°C.

**Office européen des brevets**

## RAPPORT DE RECHERCHE EUROPEENNE

Numero de la demande

EP 90 40 3665

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 197 012 (RESEARCH INSTITUTE OF PETROLEUM PROCESSING, CN) * Revendications 1-11; page 3, lignes 20-27; page 4, lignes 8-21; page 9, ligne 1 - page 10, ligne 9; page 11, lignes 1-18; pages 12-13, exemple 1 * | 1-7,13, 15 | C 04 B 33/04 B 01 J 29/02 |
| Y | | 8,10,11 ,14 | |
| X | EP-A-0 256 185 (EXXON RESEARCH AND ENGINEERING CO., US) * Revendications; page 7, lignes 1-10; exemples * | 1 | |
| Y | | 14 | |
| D,Y | EP-A-0 073 718 (JACOBS et al.) * Revendications 4,5,8; page 3, lignes 5-8; page 5, lignes 16-28 * | 8,10,11 | |

**DOMAINES TECHNIQUES RECHERCHES (Int. Cl.5)**

B 01 J
C 04 B

Le présent rapport a été établi pour toutes les revendications

| Lieu de la recherche | Date d'achèvement de la recherche | Examinateur |
|---|---|---|
| LA HAYE | 15-03-1991 | RIGONDAUD B.P.A. |